# EUROPÄISCHE PATENTANMELDUNG

(11) **EP 2 436 932 A2**
(43) Veröffentlichungstag der Anmeldung: **04.04.2012**
(21) Anmeldenummer: 11183397.6
(22) Anmeldetag: 30.09.2011
(51) Int. Cl.: F04D 29/10

(54) **Magnetfluid-Dichtung**

(30) Priorität: 30.09.2010 DE 102010047028
(71) Anmelder: KSB Aktiengesellschaft, 67227 Frankenthal (DE)
(72) Erfinder: Bosbach, Franz, 67251 Freinsheim (DE)

(57) **Zusammenfassung**

Die Erfindung betrifft eine Vorrichtung zur Abdichtung eines Spaltes (6), der zwischen relativ zueinander bewegten Bauteilen (2, 5) zwischen zwei Räumen unterschiedlichen Druckes oder Mediums besteht. Innerhalb eines Bereichs (8) des Spaltes (6) befindet sich ein Fluid (9) als Sperrflüssigkeit. Eine Magnetanordnung (7) erzeugt ein Feld, das einer Verschiebung des Fluids (9) entgegenwirkt. Erfindungsgemäß setzt sich das Fluid (9) zumindest teilweise aus einer ionischen Flüssigkeit zusammen, die magnetische Komponenten aufweist.

## Beschreibung

Die Erfindung betrifft eine Vorrichtung zur Abdichtung eines Spaltes, der zwischen relativ zueinander bewegten Bauteilen zwischen zwei Räumen unterschiedlichen Druckes oder Mediums besteht, insbesondere zur Wellenabdichtung von Kreiselpumpen, wobei sich zumindest innerhalb eines Bereichs des Spaltes ein Fluid befindet und mindestens eine Magnetanordnung ein Feld erzeugt, das einer Verschiebung des Fluids entgegenwirkt.

In der WO 2005/047741 A2 wird eine Vorrichtung beschrieben, bei der zur Wellenabdichtung einer Kreiselpumpe Magnetfluid-Dichtungen eingesetzt werden. Zwischen der Welle und dem Gehäuse besteht ein Spalt, der abgedichtet wird, damit das Fördermedium der Kreiselpumpe nicht austritt. Dazu sind in dem Spalt am Gehäuse ringförmige Permanentmagnete positioniert. Das Magnetfeld der Permanentmagnete wird durch zwei Polschuhe auf einen Bereich um die Welle konzentriert. In diesem Bereich ist ein Magnetfluid angeordnet. Bei einem Magnetfluid, das auch als Ferrofluid bezeichnet wird, sind magnetische Partikel in einem Trägeröl suspendiert. Das Magnetfeld wirkt einer axialen Verschiebung des Fluids entgegen und hält das Magnetfluid stationär in dem Bereich fest. Dadurch wird eine Abdichtung des Spaltes erreicht. Der Einsatz von Magnetfluid-Dichtungen wird durch die Druckdifferenz zwischen beiden Seiten des Spaltes begrenzt. Die WO 2005/047741 A2 beschreibt eine Anordnung, bei der Magnetfluid-Dichtungen zur Wellenabdichtung von Kreiselpumpen auch bei hohen Druckdifferenzen einsetzbar sind. Die dort eingesetzte Gleitringdichtung zum Abbau der Druckdifferenz ist wie jede Gleitringdichtung bei zu hoher Belastung dadurch gefährdet, dass durch die Reibleistung im Dichtspalt das Dichtmedium, in diesem Falle eine Magnetflüssigkeit, überhitzt, verkokt oder in die Dampfphase übergeht. Hierdurch kann es zum Trockenlauf durch Überlastung und Kavitationsschädigung kommen.

Bei Magnetfluiden kann es, insbesondere beim Einwirken von Zentrifugal- bzw. Scherkräften, zu einer Entmischung der magnetischen Partikel von der Trägerflüssigkeit kommen. Bei der Abdichtung eines Spaltes zwischen zwei Gasräumen verdampft ein Teil der Trägerflüssigkeit. Dies führt zu einer Erhöhung der Viskosität, wodurch die Reibungsverluste zunehmen und es zu einem Temperaturanstieg kommt. Nachteilig beim Einsatz von Ölen als Trägerflüssigkeit ist zudem deren Neigung bei einem Temperaturanstieg zu verkoken. Um die Verdampfung auszugleichen sind aufwendige Konstruktionen erforderlich, über die neue Trägerflüssigkeit zugeführt wird.

Die Verdampfungsneigung der Trägerflüssigkeit nimmt mit einem sinkenden Druck in den angrenzenden Gasräumen zu, so dass Magnetfluid-Dichtungen zur Abdichtung gegenüber Hochvakuumräumen nicht einsetzbar sind.

Ein großes Problem stellt der Einsatz von Magnetfluid-Dichtungen zur Abdichtung gegenüber mit Flüssigkeit gefüllten Räumen dar. Der Magnetfluidring wird zerstört, wenn sich die externe Flüssigkeit in dem Magnetfluid löst oder eine Emulsion bildet. Allgemein hält ein mit einer externen Flüssigkeit überfluteter Magnetfluidring nur wenige Stunden dicht. Abhilfe ist nur durch aufwendige Systeme möglich, bei denen Magnetfluid-Dichtungen mit Gewinde-Wellendichtungen bzw. Fanglabyrinth-Dichtungen kombiniert werden.

Aufgabe der Erfindung ist es, eine Magnetfluid-Dichtung anzugeben, bei der es nicht zu einem Verdampfen der Trägerflüssigkeit kommt und mit der Spalte sowohl gegenüber Gasräumen, Hochvakuumräumen als auch mit Flüssigkeit gefüllten Räumen dauerhaft abgedichtet werden können. Zudem soll eine Entmischung der magnetischen Partikel und der Trägerflüssigkeit verhindert werden. Ziel ist es, durch eine Vermeidung von Verdampfung und Entmischung, eine hohe Lebensdauer der Magnetfluid-Dichtung zu gewährleisten.

Diese Aufgabe wird erfindungsgemäß dadurch gelöst, dass sich das Fluid zumindest teilweise aus einer ionischen Flüssigkeit zusammensetzt, die magnetische Komponenten aufweist.

Ionische Flüssigkeiten enthalten ausschließlich Ionen. Es sind somit flüssige Salze, ohne dass das Salz in einem Lösungsmittel wie Wasser gelöst ist. Früher waren Salzschmelzen, beispielsweise Kochsalz mit einer Schmelztemperatur von über 800 °C, die einzigen bekannten Beispiele für derartige Flüssigkeiten. Ionische Flüssigkeiten werden als Salze, die bei Temperaturen unter 100 °C flüssig sind, definiert. Eigenschaften der ionischen Flüssigkeiten sind thermische Stabilität, geringe Entzündlichkeit und vernachlässigbar kleiner Dampfdruck. Durch Modifikation der Ionen ist die Löslichkeit in Wasser oder organischen Lösungsmitteln weitgehend frei bestimmbar.

Das zur Abdichtung eingesetzte Fluid kann sich vollständig aus einer ionischen Flüssigkeit zusammensetzen. Es ist auch möglich, dass mehrere ionische Flüssigkeiten das Fluid bilden. Aus Kostengründen kann es unter Umständen auch vorteilhaft sein, dass nur ein Teil des Fluids aus einer ionischen Flüssigkeit besteht und sich der restliche Anteil aus einer anderen Flüssigkeit, beispielsweise einem Öl, zusammensetzt.

Erfindungsgemäß weisen die ionischen Flüssigkeiten auf Magnetismus ansprechende Komponenten auf. Die Komponenten sind magnetisierbar oder besitzen magnetische Eigenschaften. Zweckmäßigerweise sind die Komponenten superparamagnetisch, paramagnetisch oder ferrimagnetisch. Idealerweise sind die Komponenten ferromagnetisch. Von Vorteil ist es, wenn die Komponenten eine permanente Magnetisierung aufweisen. Solche magnetisch ionischen Flüssigkeiten können somit mittels der Wirkung eines Magnetfeldes als Sperrflüssigkeit zur Abdichtung eines Spaltes eingesetzt werden. Ein solches Magnetfluid, auf Basis einer ionischen Flüssigkeit, zeichnet sich durch eine Reihe interessanter Eigenschaften aus. Zum einen ist es thermisch stabil, so dass es auch bei hohen Temperaturen nicht zur Verkokung kommt. Zudem besitzt das Fluid einen sehr niedrigen, kaum messbaren Dampfdruck. Dadurch wird ein Verdampfen der Sperrflüssigkeit verhindert. Bei der Abdichtung von Gasräumen muss kein Fluid nachgefüllt werden und selbst die Abdichtung von Hochvakuumräumen ist möglich.

Wird gegenüber einem mit Flüssigkeit gefüllten Raum abgedichtet, so wird vorzugsweise eine ionische Flüssigkeit eingesetzt, deren Ionen nicht in der externen Flüssigkeit lösbar sind. Dadurch können mit der erfindungsgemäßen Dichtung auch mit Flüssigkeit gefüllte Räume wirksam abgedichtet werden.

Die magnetischen Komponenten können in unterschiedlicher Form in der ionischen Flüssigkeit vorliegen. Eine Möglichkeit besteht darin, dass die Komponenten als Partikel vorliegen, die in der ionischen Flüssigkeit suspendiert sind. Die Partikelgröße liegt im Nanobereich, vorzugsweise zwischen 1 und 100 nm, wobei sich insbesondere Partikelgrößen im Bereich von 10 nm als günstig erweisen. Sie bestehen aus magnetischen Stoffen wie Magnetit, Ferrit, Mangan, Nickel, Kobalt oder speziellen Legierungen. Die ionische Flüssigkeit fungiert als Trägerflüssigkeit für die magnetischen Partikel. Zusätzlich kann eine oberflächenaktive Substanz, wie beispielsweise Ölsäure, beigefügt werden, die als monomolekulare Schicht an der Oberfläche der Partikel haftet. Die Radikale polarer Moleküle der oberflächenaktiven Substanz stoßen sich gegenseitig ab und verhindern damit ein Verklumpen der Partikel.

Bei einer besonders vorteilhaften Ausführung der Erfindung sind die magnetischen Komponenten Ionen der ionischen Flüssigkeiten. In diesem Fall ist keine zusätzliche Trägerflüssigkeit erforderlich, da die magnetischen Komponenten selbst Teil der ionischen Flüssigkeit sind. Aufgrund der Ladungseigenschaft von Ionen stoßen sich Komponenten gleicher Ladung automatisch ab, so dass ein Verklumpen verhindert wird, ohne dass zusätzliche Substanzen zugeführt werden müssen. Da die magnetischen Ionen Teil der ionischen Flüssigkeit sind, wird eine Entmischung ausgeschlossen und somit eine hohe Lebensdauer gewährleistet.

Sind die magnetischen Komponenten positiv geladen, bilden sie die Kationen der ionischen Flüssigkeit. Dabei kann auch nur ein Teil der Kationen der ionischen Flüssigkeit aus magnetischen Komponenten bestehen, während die restlichen Kationen keine magnetischen Eigenschaften besitzen. Um einen starken Einfluss des Magnetfeldes zu gewährleisten, erweist es sich allerdings als günstig, wenn sämtliche Kationen der ionischen Flüssigkeit magnetisch sind.

Auch die Anionen der ionischen Flüssigkeit können magnetische Komponenten sein. Auch in diesem Fall ist es möglich, dass nur ein Teil der Anionen magnetisch sind, wobei der Einfluss des Magnetfeldes besonders stark ist, wenn sämtliche Anionen der ionischen Flüssigkeit auf magnetische Felder reagieren.

Bei einer besonders vorteilhaften Variante der Erfindung sind sowohl die Anionen als auch die Kationen der ionischen Flüssigkeit magnetisch.

Magnetkräfte, die elektrostatische Anziehung zwischen den Ionen und zudem die Unlöslichkeit im Medium stellen drei Faktoren zur Sicherheit gegen ein Austragen des Magnetfluides dar. Sollte es dennoch bei Fehlbelastungen durch Druckschwankungen oder Missbrauch zu einer Leckage des Magnetfluides kommen, können diese durch geeignete Sammeleinrichtungen mit Magnetanordnung wie Magnetabscheider gesammelt und wieder der Dichtung zugeführt werden.

Besonders vorteilhaft ist eine mit einer erfindungsgemäßen Vorrichtung ausgestattete Kreiselpumpe.

Weitere Merkmale und Vorteile der Erfindung ergeben sich aus der Beschreibung von Ausführungsbeispielen anhand von Zeichnungen und aus den Zeichnungen selbst. Dabei zeigt
- Fig. 1: eine Wellenabdichtung einer Kreiselpumpe,
- Fig. 2: eine zweistufige Magnetfluid-Dichtung,
- Fig. 3: eine Detailansicht einer zweistufigen Magnetfluid-Dichtung einer Welle aus einem magnetisierbaren Werkstoff,
- Fig. 4: eine vergrößerte Darstellung des in Fig. 3 eingekreisten Bereichs,
- Fig. 5: eine Magnetfluid-Dichtung einer nicht magnetisierbaren Welle.

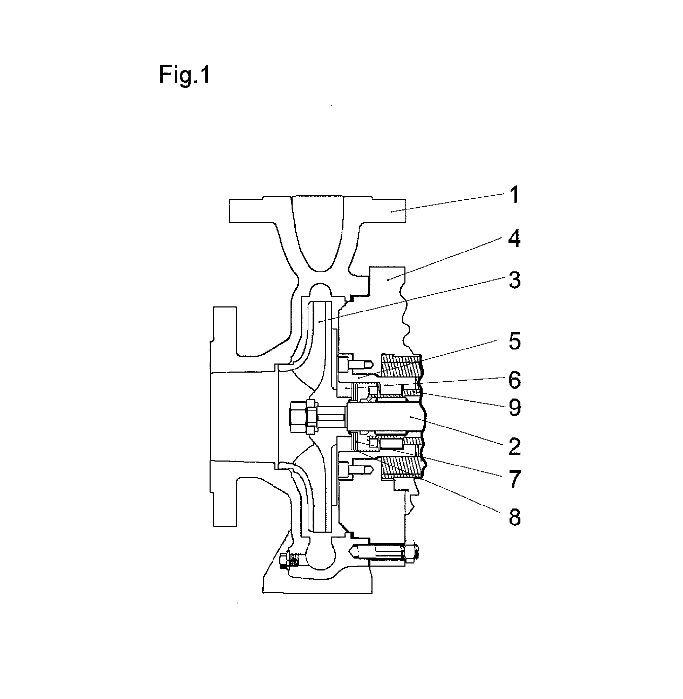

In Fig. 1 ist die Wellenabdichtung einer Kreiselpumpe mittels einer Magnetfluid-Dichtung dargestellt. In einem Pumpengehäuse 1 ist auf einer Welle 2 ein Laufrad 3 angeordnet. Auf der Druckseite wird das Pumpengehäuse 1 von einem Gehäusedeckel 4 verschlossen. Innerhalb des Gehäusedeckels 4 ist ein Lagergehäuse 5 angeordnet. Der Antrieb der Welle 2 und damit des Laufrades 3 erfolgt über einen nicht dargestellten Elektromotor.

Zwischen dem Lagergehäuse 5 und der rotierenden Welle 2 besteht ein Spalt 6. Innerhalb des Spaltes 6 ist eine Magnetanordnung 7 auf der Welle 2 positioniert. In einem Bereich 8 zwischen der Magnetanordnung 7 und dem Lagergehäuse 5 ist ein Fluid 9 angeordnet. Im Ausführungsbeispiel füllt das Fluid 9 zudem den Raum in dem die Lager positioniert sind. Erfindungsgemäß setzt sich das Fluid 9 aus einer ionischen Flüssigkeit zusammen, die magnetische Komponenten aufweist.

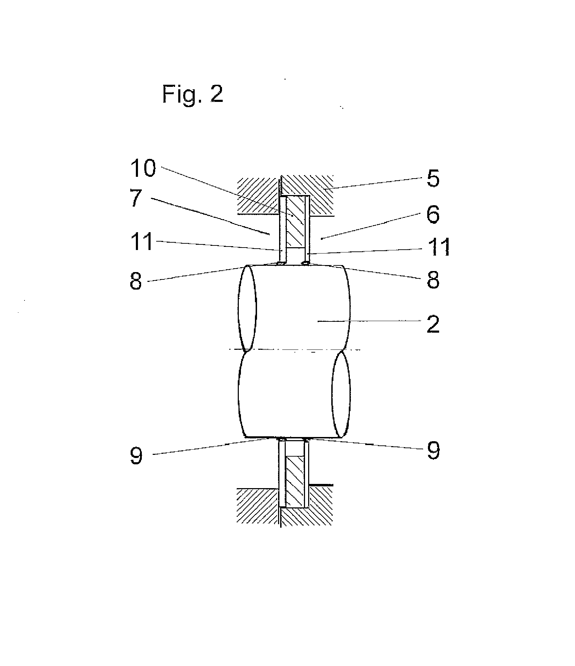

Fig. 2 zeigt eine zweistufige Magnetfluid-Dichtung. Zwischen einer rotierenden Welle 2 und einem feststehenden Bauteil 5 besteht ein Spalt 6. An dem feststehenden Bauteil 5 ist eine Magnetanordnung 7 befestigt. Die Magnetanordnung 7 besteht aus einem Permanentmagneten 10, der zwischen zwei Polringen 11 platziert ist. In den Bereichen 8, zwischen den feststehenden Polringen 11 und der rotierenden Welle 2 befindet sich ein Fluid 9 als Sperrflüssigkeit, das sich aus einer ionischen Flüssigkeit zusammensetzt, die magnetische Komponenten aufweist.

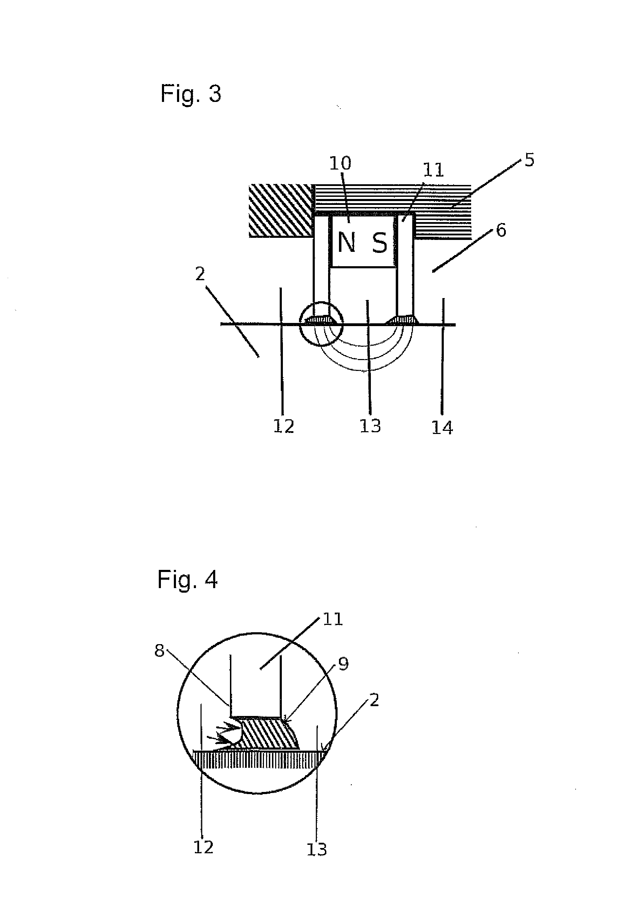

Fig. 3 zeigt eine Detailansicht einer zweistufigen Magnetfluid-Dichtung. Die Welle 2 besteht aus einem magnetisierbaren Werkstoff, wobei sich das als Linien dargestellte Magnetfeld über die Welle 2 als Verbindungsteil zwischen den beiden Polringen 11 erstreckt. Der Spalt 6 unterteilt sich in einen Bereich 12 in dem ein Druck p₁₂ des abzudichtenden Raumes herrscht, einen Bereich 13 zwischen den beiden Polringen 11 mit einem Druck p₁₃ und einen Bereich 14 mit einem Druck p₁₄.

Fig. 4 zeigt, wie bei einer Erhöhung der Druckdifferenz p₁₂-p₁₃ der Magnetflüssigkeitsring des Fluids 9 gegen eine magnetische Rückstellkraft seitlich verdrängt wird. Die Rückstellkraft entsteht, weil die magnetischen Komponenten des Fluids 9 in den Bereich des größten Magnetfeldgradienten gezogen werden. Das Magnetfeld wirkt einer axialen Verschiebung des Fluids 9 entgegen.

Beim Überschreiten eines Grenzwertes, des sogenannten Berstdrucks, bildet sich im druckseitigen Magnetflüssigkeitsring ein Leckagekanal und Medium tritt in den Zwischenbereich 13. Dadurch steigt der Druck in dem Bereich 13. Sobald die Druckdifferenz p₁₂-p₁₃ unter den Berstdruck abfällt, schließt sich der Magnetflüssigkeitsring wieder. Dieser Vorgang wird als Selbstheilung bezeichnet. Solange p₁₃-p₁₄ kleiner als der Berstdruck bleibt, dichtet der Magnetflüssigkeitsring stabil und quasi hermetisch ab. Ist aufgrund der Betriebsbedingungen p₁₂-p₁₄ größer als der doppelte Berstdruck, muss eine Dichtung mit mehr als zwei Polringen 11 verwendet werden.

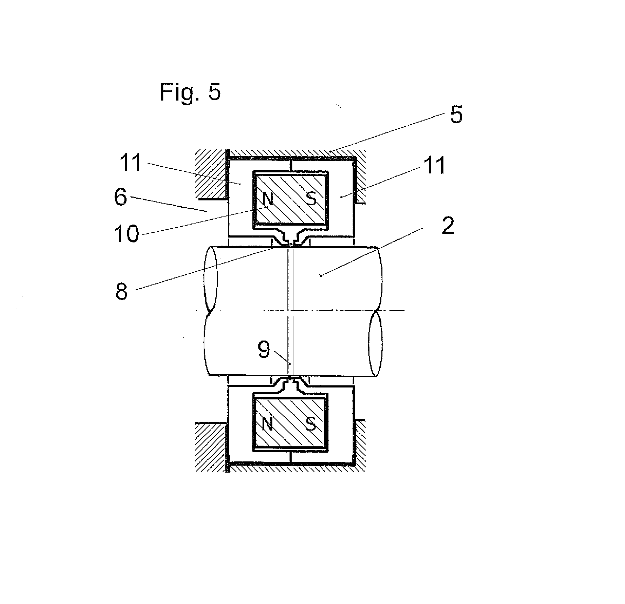

Fig. 5 zeigt eine Magnetfluid-Dichtung für eine Welle 2 aus einem nicht magnetisierbaren Werkstoff. Die Feldlinien verlaufen hier axial zwischen zwei spiegelsymmetrischen Polringen 11. An der Innenseite wölbt sich das Fluid 9 heraus und berührt die Oberfläche der Welle 2.

## Patentansprüche

1. Vorrichtung zur Abdichtung eines Spaltes (6), der zwischen relativ zueinander bewegten Bauteilen (2, 5) zwischen zwei Räumen unterschiedlichen Druckes oder Mediums besteht, insbesondere zur Wellenabdichtung von Kreiselpumpen, wobei sich zumindest innerhalb eines Bereichs (8) des Spaltes (6) ein Fluid (9) befindet und mindestens eine Magnetanordnung (7) ein Feld erzeugt, das einer Verschiebung des Fluids (9) entgegenwirkt,
**dadurch gekennzeichnet, dass**
sich das Fluid (9) zumindest teilweise aus einer ionischen Flüssigkeit zusammensetzt, die magnetische Komponenten aufweist.

2. Vorrichtung nach Anspruch 1, **dadurch gekennzeichnet, dass** zumindest ein Teil der Ionen der ionischen Flüssigkeit magnetische Komponenten sind.

3. Vorrichtung nach Anspruch 2, **dadurch gekennzeichnet, dass** zumindest ein Teil der Anionen der ionischen Flüssigkeit magnetische Komponenten sind.

4. Vorrichtung nach Anspruch 2, **dadurch gekennzeichnet, dass** zumindest ein Teil der Kationen der ionischen Flüssigkeit magnetische Komponenten sind.

5. Vorrichtung nach einem der Ansprüche 1 bis 4, **dadurch gekennzeichnet, dass** zumindest ein Teil der magnetischen Komponenten Partikel sind, die in der ionischen Flüssigkeit suspendiert sind.

6. Vorrichtung nach einem der Ansprüche 1 bis 5, **dadurch gekennzeichnet, dass** ausgetragenes Fluid (9) über eine Abscheidevorrichtung gesammelt wird.

7. Vorrichtung nach Anspruch 6, dass die Abscheidevorrichtung mit einer Magnetanordnung das Fluid (9) sammelt.

8. Vorrichtung nach Anspruch 6 oder 7, dass das abgeschiedene Fluid (9) der Abdichtung wieder zugeführt wird.

9. Kreiselpumpe **gekennzeichnet durch** eine Vorrichtung nach einem der Ansprüche 1 bis 8.
